# EUROPÄISCHE PATENTSCHRIFT

(11) **EP 1 425 879 B1**
(45) Veröffentlichungstag und Bekanntmachung des Hinweises auf die Patenterteilung: **03.04.2013**
(21) Anmeldenummer: 02774362.4
(22) Anmeldetag: 13.09.2002
(51) Int. Cl.: H04L 12/26, H04L 29/06, H04L 29/08, H04L 12/24, H04L 12/927

(54) **VERFAHREN ZUR ERMITTLUNG VON DIENSTGÜTEINDIKATOREN IN EINEM KOMMUNIKATIONSNETZ, COMPUTERPROGRAMM UND DIENSTGÜTEÜBERWACHUNGSSYSTEM**
METHOD FOR DETERMINING QUALITY OF SERVICE INDICATORS IN A TELECOMMUNICATION NETWORK, COMPUTER PROGRAM AND QUALITY OF SERVICE MONITORING SYSTEM
PROCEDE DE DETERMINATION DES INDICATEURS DE LA QUALITE DE SERVICE DANS UN RESEAU DE TELECOMMUNICATION, PROGRAMME INFORMATIQUE ET SYSTEME DE SURVEILLANCE DE LA QUALITE DE SERVICE

(30) Priorität: 14.09.2001 DE 10145486
(43) Veröffentlichungstag der Anmeldung: 09.06.2004
(73) Patentinhaber: Siemens Aktiengesellschaft, 80333 München (DE)
(72) Erfinder: SCHWAGMANN, Josef, 26892 Lehe (DE)
(86) Internationale Anmeldenummer: PCT/DE2002/003441
(87) Internationale Veröffentlichungsnummer: WO 2003/026209

(56) Entgegenhaltungen:
- WO-A-00/36846
- WO-A-98/42102

## Beschreibung

Eine Dienstgütevereinbarung (Service Level Agreement) ist eine Übereinkunft zwischen Netzbetreiber und Kunde, in der vertragliche Vereinbarungen zur Güte von bereitgestellten Diensten spezifiziert sind. Üblicherweise legt eine Dienstgütevereinbarung den Gegenstand einer Dienstleistung fest, enthält Laufzeit und Kündigungsmodalitäten, beschreibt technische Leistungen und umfaßt die Behandlung von Störungen, Vertragsstrafen und Änderungswünschen. Bislang bestehen keine Standards für Dienstgütevereinbarungen.

Zu den technischen Gesichtspunkten einer Dienstgütevereinbarung gehören die Bandbreite, die Verfügbarkeit, die Netzkapazität und die Netzqualität. Daneben spielen die Technik und Meßtechnik, mit der Dienstleistungen erbracht werden, sowie die Ausfall-, Reaktion- und Entstörzeiten als die Dienstgüte beeinflussende Faktoren eine Rolle. Eine Dienstgütevereinbarung betrifft beliebige Dienste, Netze, Komponenten und Verbindungen: Sprach-, Daten- und Internetdienste, Basisdienste und Mehrwertdienste (Value Added Services), Fest- und Mobilfunknetze, LAN, MAN und WAN, sowie Fest-, Richtfunk- und Ende-zu-Ende-Verbindungen.

Aus US 6,147,975 ist ein Verfahren zur Überwachung der Dienstgüte in einem heterogenen Kommunikationsnetz bekannt, bei dem überprüft wird, ob ein von einer Dienstgütevereinbarung umfaßtes Dienstgütemaß einen spezifizierten Schwellwert unterschreitet. Hierzu werden fortlaufend aktuelle Dienstgütewerte ermittelt und mit den jeweiligen Schwellwerten verglichen. Bei einer Schwellwertunterschreitung wird ein Alarm ausgelöst, der von der Schwellwertunterschreitung betroffene Netzelemente anzeigt. Bei der Alarmauslösung erfolgt eine Priorisierung in Abhängigkeit von der Anzahl der Schwellunterschreitungen. Der Alarm mit der höchsten Priorität wird dann den betroffenen Benutzern angezeigt.

Die internationale Veröffentlichung WOOO/36846 offenbart ein Verfahren und System zur Begrenzung der Dienstqualität einer Datenübertragung. Das Verfahren zum Begrenzen der Dienstgüte einer Datenübertragung in einem drahtlosen Telekommunikationssystem, das zumindest ein Endgerät und ein Festnetz aufweist, welches.eine Datenbank zum Speichern von Teilnehmerdaten aufweist, ist gekennzeichnet durch die Schritte: Definieren eines teilnehmerspezifischen Höchstwertes für zumindest einen Dienstgüteparameter, Speichern des teilnehmerspezifischen Höchstwertes des zumindest einen Dienstgüteparameters in der die teilnehmerdatenaufweisenden Datenbank, derartiges Überprüfen des teilnehmerspezifischen Höchstwerts des Dienstgüteparameters in Erwiderung auf die von dem Endgerät durchgeführte Anforderung nach einem Verbindungsaufbau, die mit zumindest einem Dienstgüteparameter definiert ist, das der von dem Endgerät Angeforderte zumindest eine Dienstgüteparameter mit dem teilnehmerspezifischen Höchstwert des Dienstgüteparameters verglichen wird,
dem Endgerät anbieten, einen Verbindungsaufbau mit niedrigeren Werten der Dienstgüteparameter zu akzeptieren, falls zumindest einer der von dem Endgerät angeforderten Dienstgüteparameter den für den Dienstgüteparameter definierten Höchstwert oder die Ressourcen des Systems überschreitet, oder wahlweise Aufbauen einer Verbindung falls jeder von dem Endgerät angeforderte Dienstgüteparameter innerhalb der durch den Höchstwert des Dienstgüteparameters definierten Grenzen liegt und ausreichend Systemressourcen verfügbar sind.

Zu überwachende Dienste nehmen rasch entsprechend der Anzahl der zwischen Netzbetreibern und Kunden geschlossenen Dienstgütevereinbarungen zu. Dies führt vielfach dazu, daß Netzbetreiber schnell an Grenzen stoßen, ihren Kunden Dienstgütevereinbarungen anzubieten.

Die Aufgabe der vorliegenden Erfindung besteht darin, ein Verfahren zur Ermittlung von Dienstgüteindikatoren in einem Kommunikationsnetz zu schaffen, insbesondere unter Ausnutzung bereits vorhandener Dienstüberwachungseinrichtungen.

Die Aufgabe wird erfindungsgemäß durch ein Verfahren mit den in Anspruch 1, ein Computerprogramm mit den in Anspruch 7 angegebenen Merkmalen und ein Dienstgüteüberwachungsystem mit den in Anspruch 8 angegebenen Merkmalen gelöst. Vorteilhafte Weiterbildungen des erfindungsgemäßen Verfahrens sind den abhängigen Ansprüchen zu entnehmen.

Ein wesentlicher Aspekt der vorliegenden Erfindung besteht darin, daß Dienstgüteindikatoren zur Überwachung von in Dienstgütevereinbarungen spezifizierten Dienstgütemaßen in Abhängigkeit von vorgegebenen Benutzerprofilen ermittelt werden. Benutzerprofile werden in einem Kommunikationsnetz Dienste nutzenden Benutzern anhand von Benutzerattributen zugeordnet.

Durch eine benutzerprofilabhängige Ermittlung von Dienstgüteindikatoren wird eine an Kapazitäten eines Kommunikationsnetzes angepaßte Dienstgüteüberwachung für ein breites Spektrum von Benutzern ermöglicht. Beispielsweise kann daher vermieden werden, aufgrund von Kapazitätsgrenzen nur für verhältnismäßig wenige Benutzer unselektiv zu allen Tag- und Nachtzeiten

Dienstgüteindikatoren zu ermitteln und für die übrigen Benutzer dagegen überhaupt nicht. Statt dessen kann beispielsweise die Häufigkeit für die Ermittlung von Dienstgüteindikatoren benutzerprofilabhängig zur Vermeidung von Kapazitätsengpässen gestaffelt werden, so daß Netzbetreiber einer Vielzahl von Kunden Dienstgütevereinbarungen anbieten können. Eine solche Staffelung kann anhand für bereitgestellte Dienste vereinbarter Preise oder anhand der Anzahl genutzter Dienste erfolgen, wodurch eine selektivere Ermittlung von Dienstgüteindikatoren realisiert wird.

Die vorliegende Erfindung wird nachfolgend an einem Ausführungsbeispiel anhand der Zeichnung näher erläutert. Es zeigt
- Figur 1: ein Kommunikationsnetz mit mehreren Dienstzugangspunkten und Dienstgüteüberwachungseinrichtungen,
- Figur 2: eine Tabelle für eine Zuordnung von Benutzern zu Benutzerprofilen,
- Figur 3: eine schematische Darstellung verschiedener Benutzerprofile.

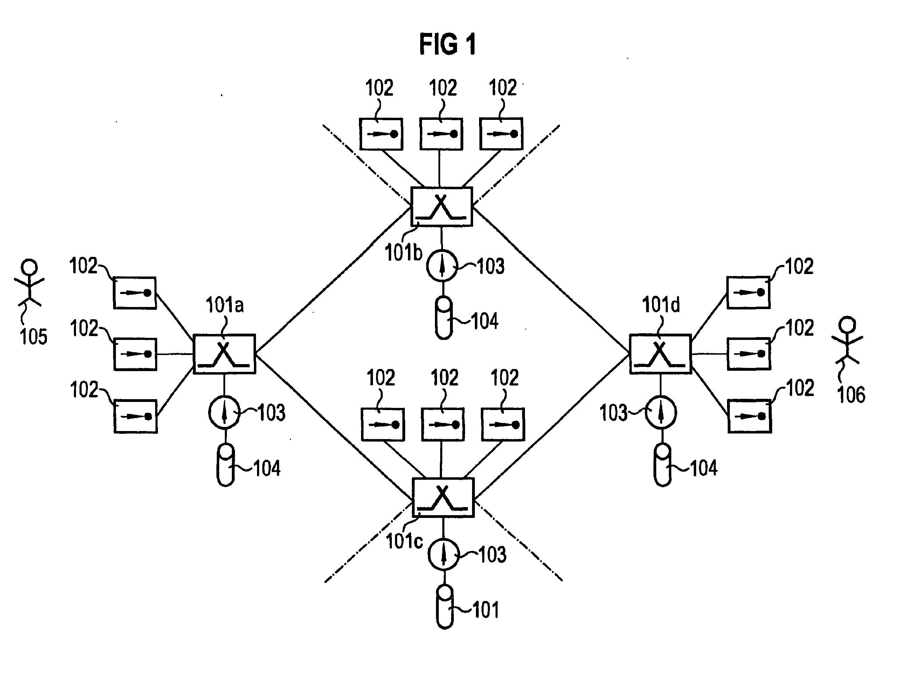

Das in Figur 1 dargestellte Kommunikationsnetz weist mehrere Vermittlungseinrichtungen 101a-d, Dienstzugangspunkte 102 für Benutzer 105, 106 sowie Dienstgüteüberwachungseinrichtungen 103 auf. Die Vermittlungseinrichtungen 101 sind über ein Versorgungsgebiet eines Kommunikationsdienste-Anbieters geographisch verteilt. Bei einer Sprach- oder Datenverbindung zwischen zwei Benutzern 105, 106 wird beispielsweise über die Vermittlungseinrichtungen 101a, 101b, 101d eine Kommunikationsverbindung zwischen den Dienstzugangspunkten 102 aufgebaut, die den beiden Benutzern 105, 106 zugeordnet sind.

Die Dienstgüteüberwachungseinrichtungen 103 sind an die Vermittlungseinrichtungen 101 angekoppelt und erfassen verbindungsrelevante, die Dienstgüte beschreibende Meßwerte. Solche Meßwerte sind beispielsweise Signalpegel, Signalverzerrungen, Ausfallzeiten der jeweiligen Vermittlungseinrichtungen, zur Verfügung stehende Bandbreiten oder die Verfügbarkeit von Leistungsmerkmalen. Die von den Dienstgüteüberwachungseinrichtungen 103 erfaßten Daten werden im vorliegenden Beispiel in Datenbanken 104 zu Analysezwecken gesammelt. Auf der Basis der in den Datenbanken 104 gesammelten Daten können beispielsweise Berichte erzeugt werden. Diese Bericht dienen als Nachweis seitens eines Netzbetreibers über laut einer Dienstgütevereinbarung zu erbringende Leistungen gegenüber einem Benutzer. Dabei werden die Daten aus Datenbanken 104 zusammengefaßt, die geographisch verteilten Vermittlungseinrichtungen zugeordnet sind.

Die Dienstgüteüberwachungseinrichtungen 103 und die Datenbanken 104 sind Bestandteile eines nicht explizit dargestellten Dienstgüteüberwachungssystems für ein Kommunikationsnetz. Das Dienstgüteüberwachungssystem weist zusätzliche ebenfalls nicht explizit dargestellte Mittel zur Zuordnung von einem vorgegebenen Benutzerprofil zu einem Benutzer und zur Ermittlung von Dienstgüteindikatoren in Abhängigkeit des Benutzerprofils auf.

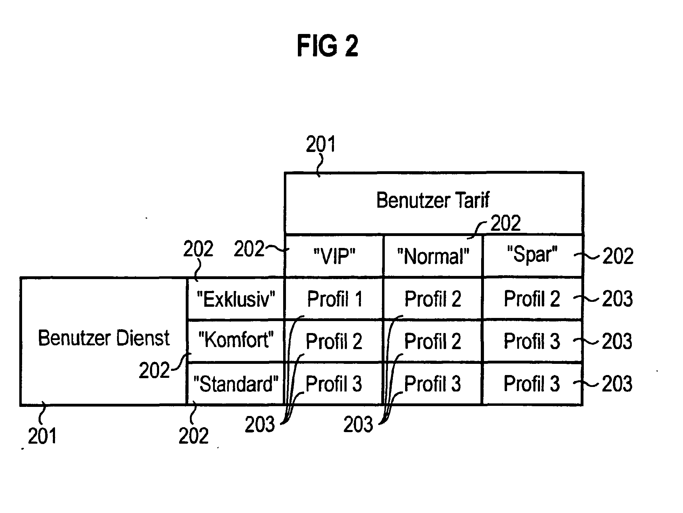

Wie in Figur 2 dargestellt, erfolgt die Zuordnung eines vorgegebenen Benutzerprofils 203 zu einem Benutzer anhand von Benutzerattributen 201. Eine solche Zuordnung kann anhand einer in einem beliebigen Netzwerkknoten oder in einem Netzwerk-Management-System gespeicherten Zuordnungstabelle erfolgen. Im vorliegenden Beispiel werden die Benutzerprofile 203 "Profil 1", "Profil 2", "Profil 3" anhand der Benutzerattribute 201 "Dienst", "Tarif" zugeordnet. Anhand in der Zuordnungstabelle gespeicherter Attributwerte 202 werden die jeweiligen Benutzerprofile 203 abgeleitet. Neben der hier beschriebenen Zuordnung von Benutzern zu Benutzerprofilen 203 mittels einer Zuordnungstabelle bestehen weitere zahlreiche allgemein bekannte Realisierungsmöglichkeiten, die für die vorliegende Erfindung geeignet sind und an dieser Stelle nicht weiter vertieft werden.

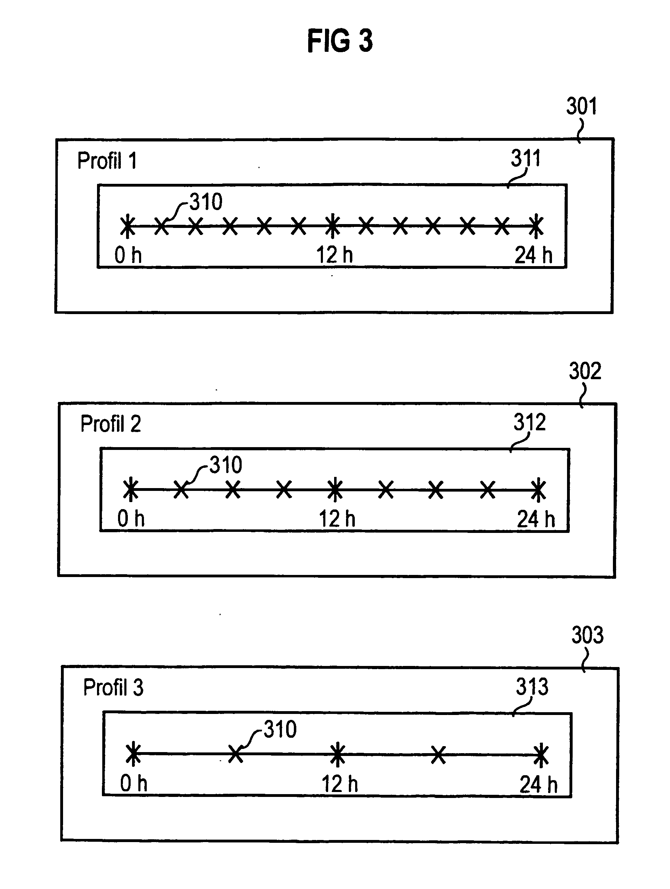

Die in Figur 3 dargestellten Benutzerprofile 301-303 unterscheiden sich durch die Zeitpunkte für die Ermittlung von Dienstgüteindikatoren. Im Sinne einer einfachen Darstellung wird vorausgesetzt, daß Art und Anzahl der zu ermittelnden Dienstgüteindikatoren für alle drei Benutzerprofile 301-303 identisch sind. In der Praxis werden sich jedoch gerade bei den Dienstgüteindikatoren und deren Meßhäufigkeit deutliche Unterschiede ergeben, auf deren explizite Darstellung hier verzichtet wird.

Ein erstes Benutzerprofil 301 weist verhältnismäßig zahlreiche Zeitpunkte 310 für die Ermittlung von Dienstgüteindikatoren auf. Die Zeitpunkte für die Ermittlung der Dienstgüteindikatoren sind in Figur 3 für die einzelnen Benutzerprofile 301-303 auf Zeitstrahlen 311-313 dargestellt. Hierbei wird vereinfachend angenommen, daß die Zeitpunkte 310 für die Ermittlung der Dienstgüteindikatoren über alle Wochentage gleich bleiben.

Entsprechend einem zweiten Benutzerprofil 302 nimmt die Anzahl der Zeitpunkte 310, zu denen die Dienstgüteindikatoren ermittelt werden, im Vergleich zum ersten Benutzerprofil 301 bereits deutlich ab. Nochmals weniger Zeitpunkte 310 für die Ermittlung von Dienstgüteindikatoren weist ein drittes Benutzerprofil 303 auf. Die in Figur 3 dargestellten Benutzerprofile 301-303 haben für die praktische Anwendung nicht näher dargestellte Derivate, die sich von den in Figur 3 darstgellten Benutzerprofilen 301-303 durch eine zeitliche Verschiebung der Zeitpunkte 310 für die Ermittlung der Dienstgüteindikatoren unterscheiden. Diese zeitliche Verschiebung dient einer optimierten Lastverteilung bei der Ermittlung der Dienstgüteindikatoren an einem beliebigen Netzwerkknoten sowie einer möglichen nachfolgenden Auswertung der Meßwerte zu Berichtszwecken oder im Sinne von Netzleitfunktionen.

Das vorangehend beschriebene Verfahren zur Überwachung der Dienstgüte ist durch ein Computerprogramm implementiert, das in einen Arbeitsspeicher einer Datenverarbeitungsanlage an einem beliebigen Netzknoten ladbar ist, und Softwarecodeabschnitte aufweist, bei deren Ausführung die vorangehenden beschriebenen Schritte ausgeführt werden, wenn das Computerprogramm in der Datenverarbeitungsanlage abläuft. Das Computerprogramm läuft dabei vorzugsweise in einem Netzwerk-Management-System, das im wesentlichen mit allen Netzwerkknoten verbunden ist.

Die Anwendung der vorliegenden Erfindung ist nicht auf das hier beschriebene Ausführungsbeispiel beschränkt.

## Patentansprüche

1. Verfahren zur Ermittlung von Dienstgüteindikatoren in einem Kommunikationsnetz, bei dem
- einem Benutzer (105, 106), für den zumindest ein Dienst an einen Dienstzugangspunkt (102) des Kommunikationsnetzes verfügbar gemacht wird, anhand von zumindest einem Benutzerattribut (201) ein vorgegebenes Benutzerprofil (203, 301, 302, 303) zugeordnet wird, und
- zumindest ein Dienstgüteindikator in Abhängigkeit des Benutzerprofils (203, 301, 302, 303) ermittelt wird.

2. Verfahren nach Anspruch 1,
bei dem die Art und/oder die Anzahl zu ermittelnder Dienstgüteindikatoren durch das Benutzerprofil (203, 301, 302, 303) vorgegeben werden/wird.

3. Verfahren nach einem der Ansprüche 1 oder 2,
bei dem die Zeitpunkte (310) für die Ermittlung des zumindest einen Dienstgüteindikators durch das Benutzerprofil (203, 301, 302, 303) vorgegeben werden.

4. Verfahren nach einem der Ansprüche 1 bis 3,
bei dem ein für den Benutzer (105, 106) verfügbar gemachter Dienst ein Benutzerattribut (201) ist.

5. Verfahren nach einem der Ansprüche 1 bis 4,
bei dem ein Preis für einen für den Benutzer (105, 106) verfügbar gemachten Dienst ein Benutzerattribut (201) ist.

6. Verfahren nach einem der Ansprüche 1 bis 5,
bei dem zumindest ein Dienst für den Benutzer (105, 106) entsprechend einer Dienstgütevereinbarung verfügbar gemacht wird.

7. Computerprogramm, das in einen Arbeitsspeicher einer Datenverarbeitungsanlage ladbar ist und zumindest einen Software-Codeabschnitt aufweist, bei dessen Ausführung,
- einem Benutzer (105, 106), für den zumindest ein Dienst an einem Dienstzugangspunkt (102) des Kommunikationsnetzes verfügbar gemacht wird, anhand von zumindest einem Benutzerattribut (201) ein vorgegebenes Benutzerprofil (203, 301, 302, 303) zugeordnet wird,
- zumindest ein Dienstgüteindikator in Abhängigkeit des Benutzerprofils (203, 301, 302, 303) ermittelt wird,
wenn das Computerprogramm in der Datenverarbeitungsanlage abläuft.

8. Dienstgüteüberwachungssystem für ein Kommunikationsnetz mit
- zumindest einem Mittel (103, 104) zur Zuordnung von einem vorgegebenen Benutzerprofil (203, 301, 302, 303) zu einem Benutzer (105, 106), für den zumindest ein Dienst an einem Dienstzugangspunkt (102) des Kommunikationsnetzes verfügbar ist, anhand von zumindest einem Benutzerattribut (201),
- zumindest einem Mittel (103, 104) zur Ermittlung von zumindest einem Dienstgüteindikator in Abhängigkeit des Benutzerprofils (203, 301, 302, 303).

## Claims

1. Method for determining the quality of service indicators in a communication network, wherein
- at least one service is made available to a user (105, 106) at a service access point (102) of said communication network, a prescribed user profile (203, 301, 302, 303) is assigned on the basis of at least one user attribute (201), and
- at least one quality of service indicator is determined according to said user profile (203, 301, 302, 303).

2. Method according to claim 1,
wherein the nature and/or the number of service quality indicators to be determined is/are prescribed by the user profile (203, 301, 302, 303).

3. Method according to one of claims 1 or 2,
wherein the points in time (310) for determining the at least one service quality indicator are prescribed by the user profile (203, 301, 302, 303).

4. Method according to one of claims 1 to 3,
wherein a service made available to the user (105, 106) is a user attribute (201).

5. Method according to one of claims 1 to 4,
wherein a price for a service made available to the user (105, 106) is a user attribute (201).

6. Method according to one of claims 1 to 5,
wherein at least one service is made available to the user (105, 106) according to a service quality agreement.

7. Computer program which can be loaded into the main memory of a data processing system, and comprises at least one section of software code, during the execution of which
- at least one service is made available to a user (105, 106) at a service access point (102) of said communication network, a prescribed user profile (203, 301, 302, 303) is assigned on the basis of at least one user attribute (201), and
- at least one service quality indicator is determined, depending on the user profile,
when the computer program is running in the data processing system.

8. Service quality monitoring system for a communication network having
- at least one means (103, 104) for assigning a prescribed user profile (203, 301, 302, 303) to a user (105, 106), to whom at least one service can be made available at a service access point (102) of the communication network, on the basis of at least one user attribute (201),
- at least one means (103, 104) for determining at least one service quality indicator depending on the user profile (203, 301, 302, 303).

## Revendications

1. Procédé de détermination d'indicateurs de la qualité de service dans un réseau de télécommunication, selon lequel :
- un profil d'utilisateur prédéfini (203, 301, 302, 303) est associé, à l'aide d'au moins un attribut d'utilisateur (201), à un utilisateur (105, 106) auquel au moins un service est rendu disponible à un point d'accès de services (102) du réseau de communication ; et
- au moins un indicateur de la qualité de service est déterminé en fonction du profil d'utilisateur (203, 301, 302, 303).

2. Procédé selon la revendication 1, selon lequel le type et/ou le nombre d'indicateurs de la qualité de service à déterminer est/sont prédéfinis par le profil d'utilisateur (203, 301, 302, 303).

3. Procédé selon l'une des revendications 1 ou 2, selon lequel les instants (310) pour la détermination de l'au moins un indicateur de la qualité de service sont prédéfinis par le profil d'utilisateur (203, 301, 302, 303).

4. Procédé selon l'une des revendications 1 à 3, selon lequel un service rendu disponible à l'utilisateur (105, 106) est un attribut d'utilisateur (201).

5. Procédé selon l'une des revendications 1 à 4, selon lequel un prix pour un service rendu disponible à l'utilisateur (105, 106) est un attribut d'utilisateur (201).

6. Procédé selon l'une des revendications 1 à 5, selon lequel au moins un service est rendu disponible à l'utilisateur (105, 106) conformément à une convention de qualité de service.

7. Programme informatique qui peut être chargé dans une mémoire de travail d'une installation de traitement de données et qui comporte au moins une partie de code logiciel lors de l'exécution de laquelle :
- un profil d'utilisateur prédéfini (203, 301, 302, 303) est associé, à l'aide d'au moins un attribut d'utilisateur (201), à un utilisateur (105, 106) auquel au moins un service est rendu disponible à un point d'accès de services (102) du réseau de communication ; et
- au moins un indicateur de la qualité de service est déterminé en fonction du profil d'utilisateur (203, 301, 302, 303)
lorsque le programme informatique tourne sur l'installation de traitement de données.

8. Système de surveillance de la qualité de service pour un réseau de communication, comportant :
- au moins un moyen (103, 104) pour associer un profil d'utilisateur prédéfini (203, 301, 302, 303), à l'aide d'au moins un attribut d'utilisateur (201), à un utilisateur (105, 106) auquel au moins un service est rendu disponible à un point d'accès de services (102) du réseau de communication ; et
- au moins un moyen (103, 104) pour déterminer au moins un indicateur de la qualité de service en fonction du profil d'utilisateur (203, 301, 302, 303).
